# EUROPEAN PATENT APPLICATION

(11) **EP 4 678 890 A1**
(43) Date of publication of application: **14.01.2026**
(21) Application number: 25189453.1
(22) Date of filing: 14.07.2025
(51) Int. Cl.: F02C 1/10, F02C 3/22, F02C 7/224

(54) **STACKED CRYOGENIC BOTTOMING CYCLES**

(30) Priority: 12.07.2024 US 202418771038
(71) Applicant: RTX Corporation, Farmington, CT 06032 (US)
(72) Inventor: EVANS, Brandon M., Farmington, 06032 (US); TERWILLIGER, Neil J., Farmington, 06032 (US)
(74) Representative: Dehns

(57) **Abstract**

An aircraft propulsion system (20) includes a core engine (24), a first bottoming cycle (54) and a second bottoming cycle (60) that utilize different working fluids having different critical temperatures such that each of the bottoming cycles (54, 60) have different heat absorption capabilities.

## Description

### TECHNICAL FIELD

The present invention relates generally to a bottom cycle for an aircraft propulsion system and more specifically to a system including two bottoming cycles with different working fluids having different heat absorption capacities.

### BACKGROUND OF THE INVENTION

Gas turbine engines typically include a compressor where inlet air is compressed and delivered into a combustor. In the combustor, the compressed air is mixed with fuel and ignited to generate an exhaust gas flow. The exhaust flow is expanded through a turbine section to generate shaft power used to drive the compressor and a propulsive fan. Some energy in the high energy exhaust flow is recovered as it is expanded through a turbine section. However, a large amount of energy in the form of heat is simply exhausted from the turbine section to the atmosphere. A bottoming cycle utilizes recovered heat to generate additional useful work. A working fluid in the bottoming cycle is heated to drive a secondary turbine to generate additional shaft power. The working fluid in the bottoming cycle is then cooled, compressed, and reheated before expansion back through the turbine. The capability of the working fluid to accept heat limits energy recovery of the bottoming cycle.

### SUMMARY OF THE INVENTION

An aircraft propulsion system according to an aspect of the present invention, among other possible things includes a core engine that includes a compressor that pressurizes an inlet flow that is mixed with a cryogenic fuel and ignited in a combustor to generate an exhaust gas flow that is expanded through a turbine to generate shaft power and a propulsive fan driven by the turbine, a first bottoming cycle with a first working fluid that is circulated within a first closed circuit that includes a first bottoming compressor and a first bottoming turbine, a second bottoming cycle with a second working fluid that is circulated within a second closed circuit that includes a second bottoming compressor and a second bottoming turbine, the first working fluid and the second working fluid are different, a main heat exchanger system for communicating thermal energy into the working fluid of each of the first bottoming cycle and the second bottoming cycle, and a fuel system that includes a cryogenic fuel storage tank and a fuel flow path for routing the cryogenic fuel to the core engine, a first fuel/working fluid heat exchanger where the first working fluid is in thermal communication with the cryogenic fuel, and a second fuel/working fluid heat exchanger where the second working fluid is in thermal communication with the cryogenic fuel.

Optionally, and in accordance with the above, the first working fluid includes a first liquid-vapor critical point and the second working fluid includes a second liquid-vapor critical point different from the first liquid-vapor critical point.

Optionally, and in accordance with any of the above, the first working fluid includes a first volume and the second working fluid includes a second volume different than the first volume.

Optionally, and in accordance with any of the above, one of the first working fluid and the second working fluid includes supercritical nitrogen.

Optionally, and in accordance with any of the above, one of the first working fluid and the second working fluid includes supercritical carbon dioxide.

Optionally, and in accordance with any of the above, the aircraft propulsion system includes a fuel bypass passage where the cryogenic fuel is routed around one of the first fuel/working fluid heat exchanger and the second fuel/working fluid heat exchanger.

Optionally, and in accordance with any of the above, the aircraft propulsion system further includes a bypass flow heat exchanger where a bypass flow from the compressor of the core engine cools the working fluid.

Optionally, and in accordance with any of the above, the main heat exchanger system includes a first main heat exchanger that is configured to heat the first working fluid of the first bottoming cycle and a second main heat exchanger that is configured to heat the second working fluid of the second bottoming cycle.

Optionally, and in accordance with any of the above, the first main heat exchanger includes a first thermal transfer capacity and the second main heat exchanger includes a second thermal transfer capacity different from the first thermal transfer capacity.

Optionally, and in accordance with any of the above, the aircraft propulsion system further includes at least one additional bottoming cycle.

A bottoming cycle system for an aircraft propulsion system according to another aspect of the present invention, among other possible things includes a first bottoming cycle with a first working fluid that is circulated within a first closed circuit that includes a first bottoming compressor and a first bottoming turbine, a second bottoming cycle with a second working fluid that is circulated within a second closed circuit that includes a second bottoming compressor and a second bottoming turbine, the first working fluid and the second working fluid are different, a main heat exchanger system for communicating thermal energy into the first working fluid and the second working fluid, and a fuel system that includes a cryogenic fuel storage tank and a fuel flow path for routing a cryogenic fuel, a first fuel/working fluid heat exchanger where the first working fluid is in thermal communication with the cryogenic fuel, and a second fuel/working fluid heat exchanger where the second working fluid is in thermal communication with the cryogenic fuel.

Optionally, and in accordance with any of the above, the first working fluid includes a first liquid-vapor critical point and the second working fluid includes a second liquid-vapor critical point different from the first liquid-vapor critical point.

Optionally, and in accordance with any of the above, the first working fluid includes a first volume and the second working fluid includes a second volume different than the first volume.

Optionally, and in accordance with any of the above, the first working fluid includes supercritical nitrogen and the second working fluid includes supercritical carbon dioxide.

Optionally, and in accordance with any of the above, the bottoming cycle system includes a fuel bypass passage where the cryogenic fuel is routed around one of the first fuel/working fluid heat exchanger and the second fuel fuel/working fluid heat exchanger.

Optionally, and in accordance with any of the above, the bottoming cycle system further includes a bypass flow heat exchanger where a bypass flow from a compressor of a core engine cools the working fluid.

A method of assembling an aircraft propulsion system according to another aspect of the present invention, among other possible things includes configuring a first bottoming cycle with a first working fluid that is circulated within a first closed circuit that includes a first bottoming compressor and a first bottoming turbine, configuring a second bottoming cycle with a second working fluid that is circulated within a second closed circuit that includes a second bottoming compressor and a second bottoming turbine, the first working fluid and the second working fluid are different, configuring a main heat exchanger system for communicating thermal energy into the working fluid of each of the first bottoming cycle and the second bottoming cycle, configuring a fuel system that includes a cryogenic fuel storage tank and a fuel flow path for routing a cryogenic fuel, configuring a first fuel/working fluid heat exchanger where the first working fluid is in thermal communication with the cryogenic fuel, and configuring a second fuel/working fluid heat exchanger where the second working fluid is in thermal communication with the cryogenic fuel.

Optionally, and in accordance with any of the above, the method further includes configuring the first working fluid to include a first liquid-vapor critical point and the second working fluid to include a second liquid-vapor critical point different from the first liquid-vapor critical point.

Optionally, and in accordance with any of the above, the method further includes configuring the first working fluid to include a first volume and the second working fluid to include a second volume different than the first volume.

Optionally, and in accordance with any of the above, the method further includes the main heat exchanger system to include at least two heat exchangers of different thermal transfer capacities.

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example aircraft propulsion system including two bottoming cycles.
Figure 2 is a chart illustrating heat absorption capacity of bottoming cycles relative to a heat source and a heat sink.
Figure 3 is a schematic view of another example aircraft propulsion system including two bottoming cycles.

### DETAILED DESCRIPTION

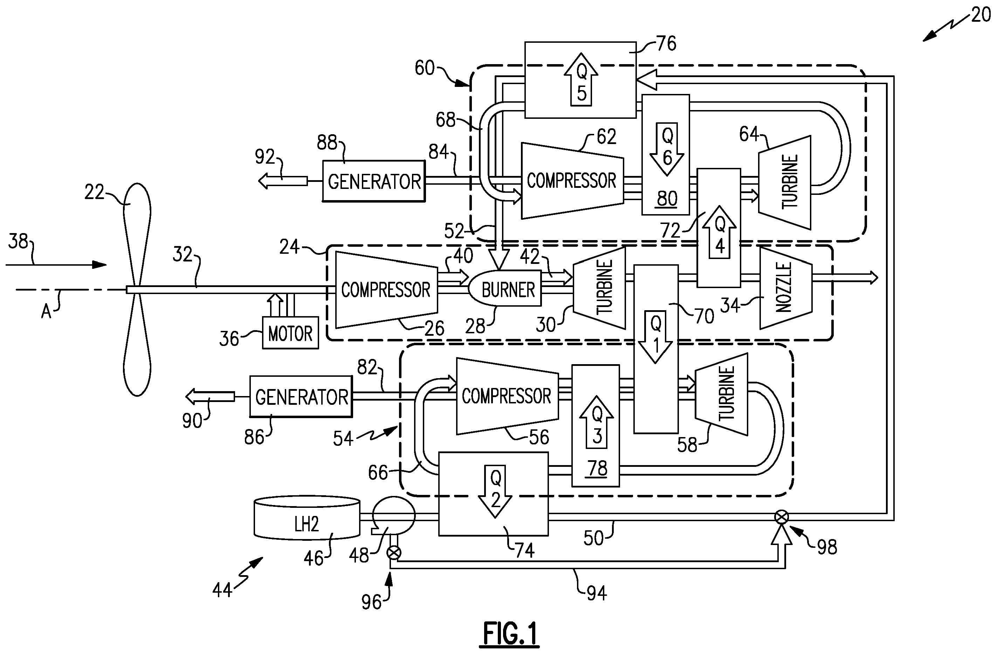

Figure 1 schematically illustrates an aircraft propulsion system 20 that includes a core engine 24 and a bottoming cycle system. The example bottoming cycle system includes a first bottoming cycle 54 and a second bottoming cycle 60 that utilize different working fluids such that each of the bottoming cycles 54, 60 have different heat absorption capabilities due to the working fluids having different critical temperatures.

One of the bottoming cycles 54, 60 uses a working fluid with a lower critical temperature than the other bottoming cycle, such as to take advantage of the entire range of cryogenic fuel heat absorption capability. The more thermal energy that can be input into each of the bottoming cycles, the more energy that can be recovered for use in the aircraft propulsion system. However, the cryogenic fuel utilized as a heat sink for the bottoming cycles has a limited capacity for heat rejection. Moreover, in some instances, depending on which working fluid is being utilized, the working fluid may also have a reduced capability for absorbing heat. Accordingly, the example propulsion system utilizes bottoming cycles of different heat absorption capabilities to take advantage of more of the heat absorption capability provided by the cryogenic fuel cold sink.

The example propulsion system 20 includes the core engine 24 with a compressor 26, combustor 28 and turbine 30. Inlet airflow 38 is compressed in the compressor 26 to generate a compressed core flow 40 that is mixed with a cryogenic fuel flow 52 in the combustor 28 to generate an exhaust gas flow 42. The exhaust gas flow 42 expands through the turbine section 30 to generate shaft power to drive an engine shaft 32 that may be utilized to drive the compressor 26 and a propulsive fan 22. The exhaust gas flow from the turbine 30 is exhausted through an exhaust nozzle 34. In one example embodiment, an electric motor 36 may be coupled to the engine shaft 32 to supplement power provided by the turbine 30. Exhaust gas flow 42 is exhausted through the nozzle 34 to the ambient environment after the communication of thermal energy into the working fluids of the bottoming cycles.

Although an example engine architecture is disclosed by way of example, other turbine engine architectures are within the contemplation and scope of this invention. Moreover, although the disclosed non-limiting embodiment depicts a turbofan turbine engine, it should be understood that the concepts described herein are not limited to use with turbofans as the teachings may be applied to other types of turbine engines. Additionally, the features of this invention may be applied to other engine configurations utilized to generate shaft power.

The first bottoming cycle 54 includes a bottoming compressor 56 that is coupled to a bottoming turbine 58 through a bottoming shaft 82. A first working fluid 66 circulates within a closed circuit between the bottoming compressor 56 and the bottoming turbine 58. The compressor 56 pressurizes the working fluid 66 that is then heated and expanded through the bottoming turbine 58 to generate shaft power. In one example embodiment, the bottoming shaft 82 is coupled to drive a generator 86 to produce electric power 90. The electric power 90 is derived from the recovery of thermal energy and may be used for engine or aircraft accessory systems. Moreover, the electric power 90 may be used to drive the electric motor 36 coupled to the engine shaft 32.

A second bottoming cycle 60 includes a second bottoming compressor 62 that is coupled to a second bottoming turbine 64 through a second bottoming shaft 84. The bottoming turbine 64 drives the second bottoming shaft 84 to drive a second generator 88 and produce electric power 92. A second working fluid 68 within the second bottoming cycle 60 is different from the working fluid 66 within the first bottoming cycle 54.

Thermal energy from the core engine 24 is transferred into each of the bottoming cycles through a main heat exchanger system. The main heat exchanger system includes a first main heat exchanger 70 and a second main heat exchanger 72. The first main heat exchanger 70 exchanges heat between the exhaust gas flow 42 produced in the core engine 24 and the first working fluid 66 within the first bottoming cycle 54. The second main heat exchanger 72 communicates thermal energy from the exhaust gas flow 42 into the second working fluid 68 of the second bottoming cycle 60.

A fuel system 44 utilizes a cryogenic fuel that is maintained at extremely low temperatures. The example fuel system 44 includes a liquid hydrogen fuel storage tank 46, a fuel pump 48 that generates a liquid fuel flow 50. The liquid fuel flow 50 is utilized as a heat sink to absorb heat from each of the bottoming cycles 54, 60. A first fuel/working fluid heat exchanger 74 is in communication with the first working fluid 66 in the first bottoming cycle 54. A second fuel working fluid heat exchanger 76 is in fluid communication with the second working fluid 68 in the second bottoming cycle 60.

The cryogenic fuel system 44 is configured to provide a hydrogen based fuel such as a liquid hydrogen (LH₂). Although hydrogen is disclosed by way of example, other cryogenic, non-carbon based fuels could be utilized and are within the contemplation of this invention.

The fuel tank 46 includes features for storing a cryogenic fuel at temperatures required to maintain the fuel in a liquid phase. Temperatures required to maintain the cryogenic fuel in a liquid phase may be as low as about -412°F (-246.7°C). In one example embodiment, the cryogenic fuel is maintained at a temperature below 0 °F (-17.8°C). In another example embodiment, the fuel is maintained in the tank 46 at temperatures below -100 °F (-73.3°C). The cryogenic fuel may be maintained at temperatures below about - 150 °F (-101.1°C) and as low as about -435 °F (-259.4°C).

Each of the first bottoming cycle 54 and the second bottoming cycle 60 include a recuperative heat exchanger 78, 80. Each of the recuperative heat exchangers 78, 80 provide for the communication of thermal energy between the working fluid within each of the respective bottoming cycles 54, 60. Thermal energy from a hotter portion of the working fluid is transferred into cooler portions of the working fluid with the same closed circuit.

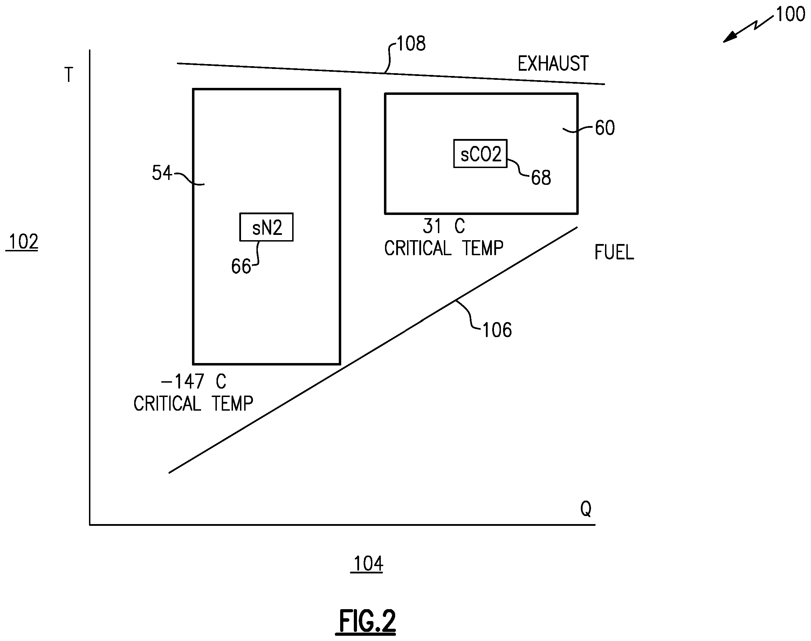

Referring to Figure 2 with continued reference to Figure 1, a graph 100 is shown and schematically illustrates a relationship between temperature 102 and heat 104 with regard to the cryogenic fuel indicated at 106. In one example embodiment, the first working fluid 66 comprises a super critical nitrogen and the second working fluid 68 comprises a super critical carbon dioxide as schematically shown at 68. Although example working fluids with different critical temperatures are disclosed, other working fluids and mixtures could be utilized and tailored to application specific temperature ranges and operation.

Heat input from the exhaust gas flow 108 remains substantially constant during engine operation. However, the amount of heat energy input into the fuel 106 increases and thereby may reach a limit as to how much heat can be captured. The example bottoming cycles 54, 60 that have different capabilities for accepting heat. In one disclosed example embodiment, the second bottoming cycle 60 includes the working fluid 68 that provides for absorption of heat at higher temperatures that correspond with the heat capacity of the fuel after it has accepted heat from the first working fluid 66 of the first bottoming cycle 54.

The example bottoming cycles are tailored to the specific heat absorption capabilities of the cryogenic fuel 50. The first bottoming cycle 54 is tailored to utilize the cryogenic fuel as a heat sink at the lower temperatures and the second bottoming cycle 60 is configured to absorb heat energy from the fuel once it has been heated in the first bottoming cycle 54.

Although example working fluid types are illustrated and disclosed by way of example, other working fluids with other super critical temperatures or other material properties that are conducive to absorbing heat at specific temperatures may be utilized and are within the contemplation and scope of this invention. Additionally, the amount of working fluid and size of each of the first bottoming cycle 54 and second bottoming cycle 60 may be adjusted to also provide different levels of heat absorption capabilities between the first and second bottoming cycles.

The example propulsion system 20 includes a bypass passage 94 for the fuel flow 50. The bypass 94 is operable by first and second valves 96, 98 and provide the ability for the cryogenic fuel flow 50 to be routed around the first fuel/working fluid heat exchanger 74. Bypassing the first fuel/working fluid heat exchanger 74 provides for operation of the first and second bottoming cycles 54, 60 to be adjusted to accommodate current operating conditions and the limits of the cold sink provided by the cryogenic fuel.

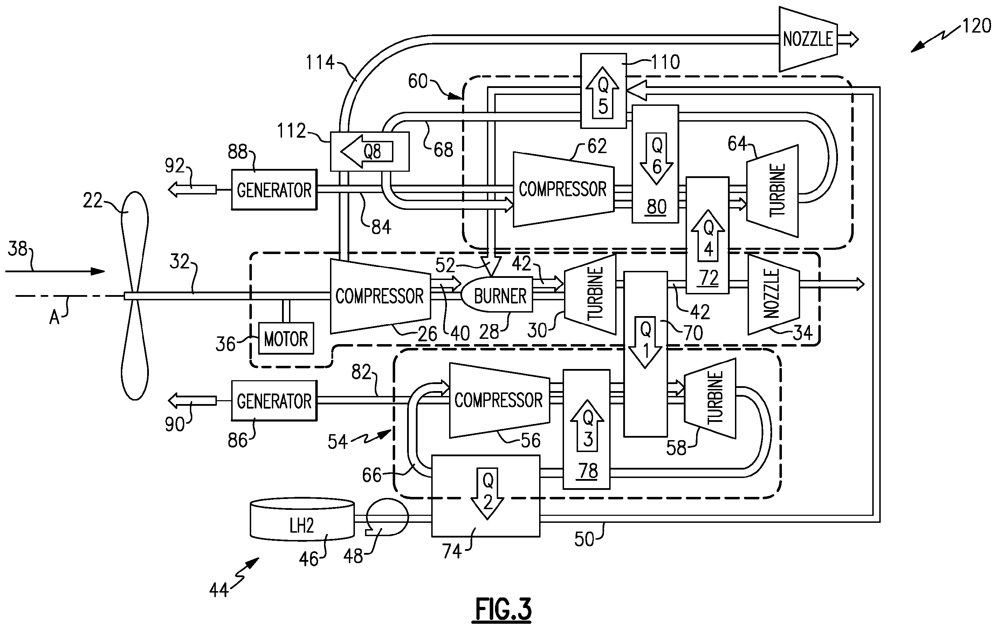

Referring to Figure 3 with continued reference to Figure 2, another example aircraft propulsion system 120 is illustrated and includes the first bottoming cycle 54 and the second bottoming cycle 60 as previously described with regard to Figure 1. The aircraft propulsion system embodiment 120 includes a first fuel/air heat exchanger 110 and a bypass flow heat exchanger 112.

The heat exchanger 110 in the second bottoming cycle 60 provides additional heat input to vaporize the liquid fuel flow 50 prior to injection into the combustor 28. The bypass flow heat exchanger 112 utilizes a bypass flow 114 from the compressor section 26 of the core engine 24 to cool the working fluid flow. Cooling of the working fluid flow provides for additional waste heat recovery by the working fluid flow 68. The example second bottoming cycle 60 provides for additional waste heat recovery with the extra cooling capacity provided by the cooling with the disclosed bypass flow 114 or other cooling airflows from either the propulsor or the compressor section 26.

Although additional heat exchangers 110 and 112 are shown by way of example, other heat exchanger, and/or combinations of heat exchangers may be included to further provide for exchange of thermal energy from other systems to maximize heat recovery.

Utilizing bottoming cycles of different capabilities to cascade the heat acceptance capabilities of the cryogenic fuel flow 50 increases the total amount of waste heat that can be recovered from the example core engine.

Accordingly, the example propulsion systems include bottoming cycles that leverage the cold sink available from cryogenic fuels and tailor operation to optimize bottoming cycle efficiency.

Although embodiments of this invention have been shown, a worker of ordinary skill in this art would recognize that modifications would come within the scope of this invention. For that reason, the following claims should be studied to determine the true scope and content of this invention.

## Claims

1. A bottoming cycle system for an aircraft propulsion system (20; 120) comprising:
a first bottoming cycle (54) in which a first working fluid (66) is circulated within a first closed circuit comprising a first bottoming compressor (56) and a first bottoming turbine (58);
a second bottoming cycle (60) in which a second working fluid (68) is circulated within a second closed circuit comprising a second bottoming compressor (62) and a second bottoming turbine (64), wherein the first working fluid (66) and the second working fluid (68) are different;
a main heat exchanger system for communicating thermal energy into the first working fluid (66) and the second working fluid (68); and
a fuel system (44) comprising a cryogenic fuel storage tank (46) and a fuel flow path for routing a cryogenic fuel (50);
a first fuel/working fluid heat exchanger (74) in which the first working fluid (66) is in thermal communication with the cryogenic fuel (50); and
a second fuel/working fluid heat exchanger (76) in which the second working fluid (68) is in thermal communication with the cryogenic fuel (50).

2. The bottoming cycle system as recited in claim 1, wherein the first working fluid (66) comprises a first liquid-vapor critical point and the second working fluid (68) comprises a second liquid-vapor critical point different from the first liquid-vapor critical point.

3. The bottoming cycle system as recited in claim 1 or 2, wherein the first working fluid (66) comprises a first volume and the second working fluid (68) comprises a second volume different than the first volume.

4. The bottoming cycle system as recited in any preceding claim, wherein:
one of the first working fluid (66) and the second working fluid (68) comprises supercritical nitrogen; and/or
one of the first working fluid (66) and the second working fluid (68) comprises supercritical carbon dioxide.

5. The bottoming cycle system as recited in any of claims 1 to 3, wherein the first working fluid (66) comprises supercritical nitrogen and the second working fluid (68) comprises supercritical carbon dioxide.

6. The bottoming cycle system as recited in any preceding claim, including a fuel bypass passage (94) in which the cryogenic fuel (50) is routed around one of the first fuel/working fluid heat exchanger (74) and the second fuel/working fluid heat exchanger (76).

7. The bottoming cycle system as recited in any preceding claim, further comprising a bypass flow heat exchanger (112) in which a bypass flow (114) from a compressor (26) of a core engine (24) cools the first working fluid (66) and/or the second working fluid (68).

8. The bottoming cycle system as recited in any preceding claim, wherein the main heat exchanger system comprises a first main heat exchanger (70) configured to heat the first working fluid (66) of the first bottoming cycle (54) and a second main heat exchanger (72) configured to heat the second working fluid (68) of the second bottoming cycle (60).

9. The bottoming cycle system as recited in claim 8, wherein the first main heat exchanger (70) comprises a first thermal transfer capacity and the second main heat exchanger (72) comprises a second thermal transfer capacity different from the first thermal transfer capacity.

10. The bottoming cycle system as recited in any preceding claim, further comprising at least one additional bottoming cycle.

11. An aircraft propulsion system (20; 120) comprising:
a core engine (24) comprising a compressor (26), a combustor (28), a turbine (30), and a propulsive fan (22), wherein the compressor (26) pressurizes an inlet flow that is mixed with the cryogenic fuel (50) and ignited in the combustor (28) to generate an exhaust gas flow (42) that is expanded through the turbine (30) to generate shaft power, wherein the propulsive fan (22) is driven by the turbine (30); and
the bottoming cycle system as recited in any preceding claim, wherein the fuel flow path is configured to route the cryogenic fuel (50) to the core engine (24).

12. A method of assembling an aircraft propulsion system (20; 120) comprising:
configuring a first bottoming cycle (54) with a first working fluid (66) that is circulated within a first closed circuit comprising a first bottoming compressor (56) and a first bottoming turbine (58);
configuring a second bottoming cycle (60) with a second working fluid (68) that is circulated within a second closed circuit comprising a second bottoming compressor (62) and a second bottoming turbine (64), wherein the first working fluid (66) and the second working fluid (68) are different;
configuring a main heat exchanger system for communicating thermal energy into the first working fluid (66) and the second working fluid (68);
configuring a fuel system (44) comprising a cryogenic fuel storage tank (46) and a fuel flow path for routing a cryogenic fuel (50);
configuring a first fuel/working fluid heat exchanger (74) in which the first working fluid (66) is in thermal communication with the cryogenic fuel (50); and
configuring a second fuel/working fluid heat exchanger (76) in which the second working fluid (68) is in thermal communication with the cryogenic fuel (50).

13. The method as recited in claim 12, further comprising configuring the first working fluid (66) to comprise a first liquid-vapor critical point and the second working fluid (68) to comprise a second liquid-vapor critical point different from the first liquid-vapor critical point.

14. The method as recited in claim 12 or 13, further comprising configuring the first working fluid (66) to comprise a first volume and the second working fluid (68) to comprise a second volume different than the first volume.

15. The method as recited in any of claims 12 to 14, further comprising configuring the main heat exchanger system to comprise at least two heat exchangers (70, 72) of different thermal transfer capacities.
